# EUROPEAN PATENT APPLICATION

(11) **EP 3 633 967 A1**
(43) Date of publication of application: **08.04.2020**
(21) Application number: 19190728.6
(22) Date of filing: 08.08.2019
(51) Int. Cl.: H04N 1/62

(54) **IMAGE PROCESSING APPARATUS AND IMAGE PROCESSING METHOD**

(30) Priority: 01.10.2018 JP 2018186753
(71) Applicant: Toshiba Tec Kabushiki Kaisha, 141-8562 Tokyo (JP)
(72) Inventor: IWAKI, Kiyoshi, Shinagawa-ku,, Tokyo 141-8562 (JP)
(74) Representative: Bandpay & Greuter

(57) **Abstract**

According to an embodiment, an image processing apparatus includes a display device and a processor. The display device displays a first image corresponding to first image data based on a document to be adjusted, and a second image corresponding to second image data based on a document for comparison. The processor creates a first conversion table by calculating a color value defined in a first color space and corresponding to a first position specified in the displayed first image, and a color value defined in the first color space and corresponding to a second position specified in the displayed second image.

## Description

### FIELD

An embodiment to be described here generally relates to an image processing apparatus and an image processing method.

### BACKGROUND

For example, when an old printer is replaced with a new printer, a particular color of a printed material by the new printer does not meet preference of a user in some cases. There are some techniques of adjusting a particular color of a printed material to a user's favorite color. For example, there is a color adjustment technique using a colorimetric device. In the color adjustment technique using a colorimetric device, a user employs the colorimetric device to measure a value of a color to be adjusted from a certain printed material and a value of a color to be an adjustment target from another printed material. The user adjusts grid points of a color conversion table on the basis of a measurement result of the color to be adjusted and a measurement result of the color to be an adjustment target.

As another example, there is a color adjustment technique using a color balance. In the color adjustment technique using a color balance, the user adjusts the settings of intensities of C (Cyan), M (Magenta), Y (Yellow), and K (Black) in a printer such that a particular color of a printed material is set to a favorite color.

However, the color adjustment technique using a colorimetric device needs to use a special device such as a colorimetric device. Therefore, the user has difficulty of readily performing the color adjustment. Further, the color adjustment technique using a color balance needs to appropriately adjust the intensities of the respective C, M, Y, and K such that a particular color of a printed material is set to a favorite color. Therefore, the user has difficulty of easily performing the color adjustment. Additionally, since the intensities of the respective C, M, Y, and K are adjusted, there is a possibility that colors other than the particular color are largely changed even if the particular color of the printed material is set to the favorite color.

### SUMMARY OF INVENTION

To solve such problem, there is provided a An image processing apparatus, comprising:
a storage device configured to store
   first image data based on a document to be adjusted, and
   second image data based on a document for comparison;
a display device configured to display
   a first image corresponding to the first image data, and
   a second image corresponding to the second image data;
an input device configured to receive
   a first instruction to specify a first position in the displayed first image, the first position in the first image data corresponding to a color to be adjusted, and
   a second instruction to specify a second position in the displayed second image, the second position in the second image data corresponding to a color to be an adjustment target for the color of the first position; and
a processor configured to
   calculate a color value defined in a first color space and corresponding to the first position in the first image data, and a color value defined in the first color space and corresponding to the second position in the second image data, and
   create a first conversion table for converting, on a basis of the calculated color value corresponding to the first position and the calculated color value corresponding to the second position, the color value defined in the first color space into a color value defined in a second color space different from the first color space.

Preferably, the first position includes a region including a plurality of pixels included in the first image data, and
the second position includes a region including a plurality of pixels included in the second image data.

Preferably still, each of the first color space and the second color space is a device-dependent color space, and
the processor is configured to
calculate a first color value defined in the first color space and corresponding to the first position,
convert the first color value into a second color value defined in a third color space that is a device-independent color space,
calculate a third color value defined in the first color space and corresponding to the second position,
convert the third color value into a fourth color value defined in the third color space,
create a second conversion table for converting the second color value into the fourth color value in the third color space, and
create the first conversion table on a basis of the second conversion table.

Preferably yet, the first color space includes an RGB color space,
the second color space includes a CMYK color space, and
the third color space includes a Lab color space.

Suitably, the image processing apparatus further comprises:
a scanner configured to
   read a document, and
   output image data based on the document, wherein
the scanner is configured to
   read the document to be adjusted and the document for comparison, and
   output the first image data and the second image data, which are to be used to create the first conversion table, and
the storage device is configured to store the first image data and the second image data that are output from the scanner.

Suitably still, the storage device is configured to store predetermined image data as the second image data, and
the scanner is configured to
read the document to be adjusted, and
output the first image data, which is to be used to create the first conversion table.

Suitably yet, the storage device includes an existing conversion table for converting the color value defined in the first color space into the color value defined in the second color space, and
the processor is configured to
convert the calculated first color value into a color value corresponding to the first color value and being defined in the second color space by using the existing conversion table,
convert the converted color value corresponding to the first color value into the second color value by using a predetermined first polynomial coefficient,
convert the calculated third color value into a color value corresponding to the third color value and being defined in the second color space by using the existing conversion table, and
convert the converted color value corresponding to the third color value into the fourth color value by using the first polynomial coefficient.

Typically, the created first conversion table provides conversion of the color value converted using the second conversion table into the color value defined in the second color space by using a predetermined second polynomial coefficient.

Typically still, the processor is configured to
acquire, from the first image data, color values of a plurality of pixels included in a region corresponding to the first position, the color values being defined in the first color space, and calculate an average value of the acquired color values of the plurality of pixels, as the color value defined in the first color space and corresponding to the first position, and
acquire, from the second image data, color values of a plurality of pixels included in a region corresponding to the second position, the color values being defined in the first color space, and calculate an average value of the acquired color values of the plurality of pixels, as the color value defined in the first color space and corresponding to the second position.

The invention also relates to an image processing method, comprising:
acquiring first image data based on a document to be adjusted, and second image data based on a document for comparison;
displaying, by a display device, a first image corresponding to the acquired first image data, and a second image corresponding to the acquired second image data;
receiving, by an input device, a first instruction to specify a first position in the displayed first image, the first position in the first image data corresponding to a color to be adjusted;
receiving, by the input device, a second instruction to specify a second position in the displayed second image, the second position in the second image data corresponding to a color to be an adjustment target for the color of the first position; and
creating a first conversion table for converting, on a basis of a color value defined in a first color space and corresponding to the first position in the first image data and a color value defined in the first color space and corresponding to the second position in the second image data, the color value defined in the first color space into a color value defined in a second color space different from the first color space.

Preferably, the image processing method further comprises:
calculating a first color value defined in the first color space and corresponding to the first position,
converting the first color value into a second color value defined in a third color space that is a device-independent color space,
calculating a third color value defined in the first color space and corresponding to the second position,
converting the third color value into a fourth color value defined in the third color space,
creating a second conversion table for converting the second color value into the fourth color value in the third color space, and
creating the first conversion table on a basis of the second conversion table.

Preferably still, the image processing method further comprises:
converting the calculated first color value into a color value corresponding to the first color value and being defined in the second color space by using the existing conversion table,
converting the converted color value corresponding to the first color value into the second color value by using a predetermined first polynomial coefficient,
converting the calculated third color value into a color value corresponding to the third color value and being defined in the second color space by using the existing conversion table, and
converting the converted color value corresponding to the third color value into the fourth color value by using the first polynomial coefficient.

Preferably yet, the image processing method further comprises:
acquiring, from the first image data, color values of a plurality of pixels included in a region corresponding to the first position, the color values being defined in the first color space, and calculate an average value of the acquired color values of the plurality of pixels, as the color value defined in the first color space and corresponding to the first position, and
acquiring, from the second image data, color values of a plurality of pixels included in a region corresponding to the second position, the color values being defined in the first color space, and calculate an average value of the acquired color values of the plurality of pixels, as the color value defined in the first color space and corresponding to the second position.

The invention also concerns a computer program comprising instructions which, when the program is executed by a computer, cause the computer to carry out the steps of the method described above.

The invention further relates to a computer-readable medium having stored thereon the computer program described above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram showing an example of a configuration of a multi-function peripheral (MFP) according to an embodiment.
Fig. 2 is a block diagram showing an example of a configuration implemented in a processor of the MFP according to the embodiment.
Fig. 3 is a diagram showing an example of a display screen for image data according to the embodiment.
Fig. 4 is a diagram showing an example of selecting an adjustment color and an adjustment target color on the display screen according to the embodiment.
Fig. 5 is a diagram showing an example of converting RGB values into Lab values according to the embodiment.
Fig. 6 is a diagram showing an example of creating a Lab-to-Lab' conversion table according to the embodiment.
Fig. 7 is a diagram showing an example of creating the Lab-to-Lab' conversion table according to the embodiment.
Fig. 8 is a diagram showing an example of creating the Lab-to-Lab' conversion table according to the embodiment.
Fig. 9 is a diagram showing an example of creating the Lab-to-Lab' conversion table according to the embodiment.
Fig. 10 is a diagram showing an example of creating the Lab-to-Lab' conversion table according to the embodiment.
Fig. 11 is a diagram showing an example of creating the Lab-to-Lab' conversion table according to the embodiment.
Fig. 12 is a diagram showing an example of creating a color conversion table according to the embodiment.
Fig. 13 is a flowchart for showing an example of print processing based on color adjustment of the MFP according to the embodiment.

### DETAILED DESCRIPTION

According to one embodiment, an image processing apparatus includes a storage device, a display device, an input device, and a processor. The storage device is configured to store first image data based on a document to be adjusted, and second image data based on a document for comparison. The display device is configured to display a first image corresponding to the first image data, and a second image corresponding to the second image data. The input device is configured to receive a first instruction to specify a first position in the displayed first image, the first position in the first image data corresponding to a color to be adjusted. Additionally, the input device is configured to receive a second instruction to specify a second position in the displayed second image, the second position in the second image data corresponding to a color to be an adjustment target for the color of the first position. The processor is configured to calculate a color value defined in a first color space and corresponding to the first position in the first image data, and a color value defined in the first color space and corresponding to the second position in the second image data. Additionally, the processor is configured to create a first conversion table for converting, on the basis of the calculated color value corresponding to the first position and the calculated color value corresponding to the second position, the color value defined in the first color space into a color value defined in a second color space different from the first color space.

Hereinafter, an embodiment will be described with reference to the drawings. In the drawings, identical reference symbols represent identical or similar parts.

### [Configuration]

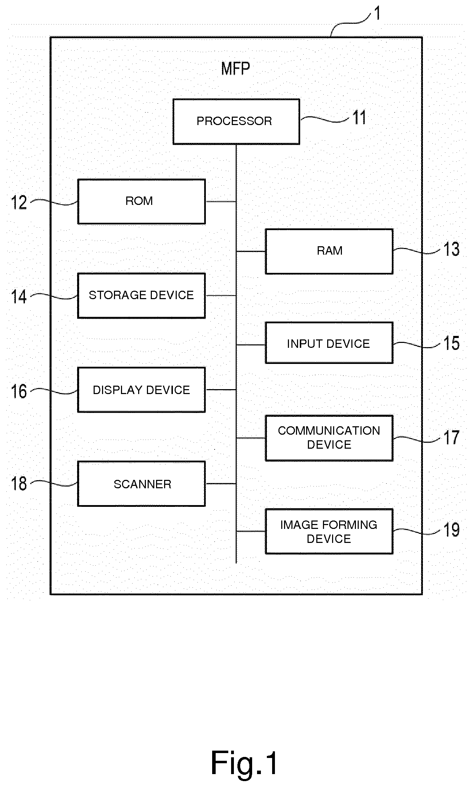

A configuration of a multi-function peripheral (MFP) will be described. Fig. 1 is a block diagram showing an example of a configuration of an MFP 1. For example, the MFP 1 is an example of an image processing apparatus.

The MFP 1 includes a processor 11, a read only memory (ROM) 12, a random access memory (RAM) 13, a storage device 14, an input device 15, a display device 16, a communication device 17, a scanner 18, and an image forming device 19.

The processor 11 is, for example, a central processing unit (CPU). The processor 11 executes various types of processing by executing programs stored in the ROM 12 or the storage device 14.

The ROM 12 stores programs, control data, or the like that cause the processor 11 to execute various types of processing. The ROM 12 is an example of a storage unit. The RAM 13 is a working memory.

The storage device 14 is a rewritable nonvolatile memory. For example, the storage device 14 is a device such as a solid state drive (SSD) or a hard disk drive (HDD). The storage device 14 stores programs, control data, and the like that cause the processor 11 to execute various types of processing. The storage device 14 stores data collected by various types of processing of the processor 11, and the like. The storage device 14 stores image data based on documents to be read by the scanner 18 to be described later. Note that the documents include, but not limited to printed materials obtained by printing texts on media, various printed materials obtained by printing images, a combination of texts and images, and the like on media.

The input device 15 is a user interface that receives an operation of the user. For example, the input device 15 includes a keyboard and a touch pad mounted on the display device 16 to be described later.

The display device 16 is an element that displays various types of information. For example, the display device 16 is a liquid crystal display.

The communication device 17 is an interface for the MFP 1 to communicate with another apparatus via a network. The communication device 17 may be a wired communication interface or a wireless communication interface.

The scanner 18 is a device that reads documents and captures image data based on the documents. The image data captured by the scanner 18 is also referred to as scanned image data. The scanner 18 saves the image data captured from the documents in the storage device 14. For example, the scanner 18 includes an image sensor or the like. The image sensor is an imaging device in which pixels, each of which converts light into an electrical signal (image signal), are arrayed in lines. For example, the image sensor includes a charge coupled device (CCD), a complementary metal oxide semiconductor (CMOS), or another imaging device.

The image forming device 19 is a printer that forms an image on a medium on the basis of print data. The print data may be image data based on a document read by the scanner 18 or may be data transmitted from a personal computer (PC) (not shown) via the communication device 17. For example, the image forming device 19 includes a photosensitive drum, an electrostatic charger, an exposure device, a developing device, and the like for each of the colors of C, M, Y, and K. The surface of the photosensitive drum is uniformly electrically charged by the electrostatic charger. The exposure device emits light with a wavelength, which is capable of forming a latent image, to the electrically-charged photosensitive drum in accordance with an electrical signal of print data, and then forms an electrostatic latent image on the electrically-charged photosensitive drum. The developing device causes a toner (developer) to adhere to the electrostatic latent image formed on the photosensitive drum, and the image of the toner (toner image) is formed on the surface of the photosensitive drum. The image forming device 19 transfers the toner image formed on the surface of the photosensitive drum to a medium. The image forming device 19 fixes the toner images of the respective colors of C, M, Y, and K on the medium to form a color image on the medium, and outputs a printed material.

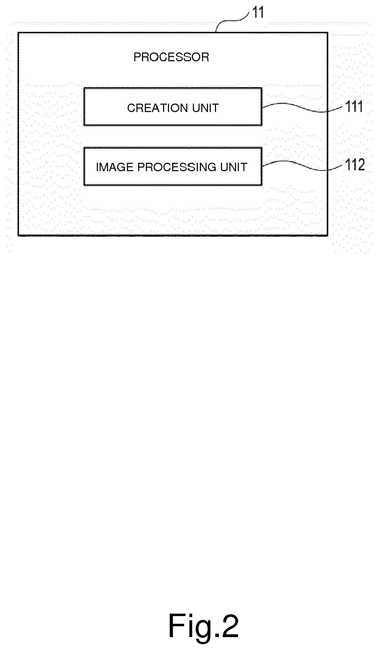

Fig. 2 is a block diagram showing an example of the configuration implemented in the processor 11 of the MFP 1. The processor 11 executes programs stored in the ROM 12 or the storage device 14, thus implementing the following units. The processor 11 includes a creation unit 111 and an image processing unit 112.

The creation unit 111 will be described. The creation unit 111 creates a color conversion table for executing color adjustment such that a color of a printed material to be output by the MFP 1 is set to a user's favorite color. The color conversion table is a table for converting print data from color values defined in a color space of R (red), G (green), and B (blue) to color values defined in a CMYK color space. The color conversion table corresponds to an RGB-to-CMYK' table. The color conversion table is also referred to as a first conversion table. The color space can also be referred to as a color system. The RGB color space is an example of the first color space. The CMYK color space is an example of the second color space. The first color space and the second color space are device-dependent color spaces. An example of creating the color conversion table will be described later.

The image processing unit 112 will be described. The image processing unit 112 performs color conversion processing on the print data by using the color conversion table. The color conversion processing is processing of converting the print data from the color values defined in the RGB color space to the color values defined in the CMYK color space. For example, the image processing unit 112 acquires, from the print data, color values, which are defined in the RGB color space, of the respective pixels included in the print data. The image processing unit 112 converts the pixels included in the print data from the color values defined in the RGB color space to the color values defined in the CMYK color space by using the color conversion table. Thus, the image processing unit 112 converts the print data defined in the RGB color space into print data defined in the CMYK color space. The image processing unit 112 outputs the print data defined in the CMYK color space to the image forming device 19.

### [Processing of Creating Lab-to-Lab' Conversion Table]

An example of creating a Lab-to-Lab' conversion table to be used to create the color conversion table will be described. The Lab-to-Lab' conversion table is a table for converting Lab values into Lab' values. The Lab values and the Lab' values are color values defined in a Lab color space. The Lab color space is an example of a third color space. The third color space is a device-independent color space and is a color space related to human sight. The Lab values and the Lab' values correspond to values obtained when the printed material is measured with a colorimetric device. Note that the Lab' values mean Lab values obtained after conversion using the Lab-to-Lab' conversion table. So, the Lab' values are given ""'so as to be distinguished from the Lab values before the conversion using the Lab-to-Lab' conversion table. The Lab-to-Lab' conversion table is also referred to as a second conversion table.

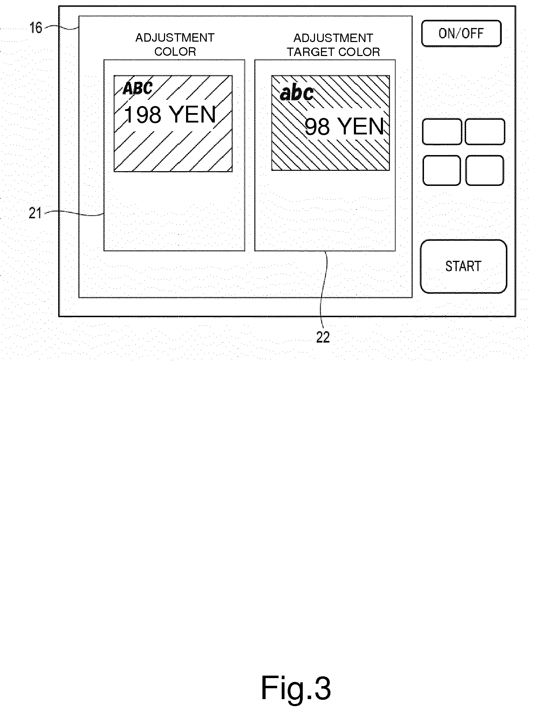

First, description will be given on a display screen for image data, with which a user specifies information related to the Lab-to-Lab' conversion table. Fig. 3 is a diagram showing an example of the display screen for image data. The display device 16 displays first image data 21 and second image data 22.

The first image data 21 is image data based on a first document read by the scanner 18. The first image data 21 is stored in the storage device 14. The first document is a printed material output by the MFP 1. The first document includes an adjustment color. The adjustment color is a color on which the user desires to perform color adjustment. The adjustment color is also referred to as a color to be adjusted.

The second image data 22 is image data to be compared with the first image data 21. The second image data 22 is stored in the storage device 14. In an example, the second image data 22 is image data related to and based on a second document read by the scanner 18. In this case, for example, the second document is a printed material output by an MFP different from the MFP 1. For example, the MFP different from the MFP 1 is one replaced with the MFP 1. In another example, the second image data 22 is image data corresponding to the second document stored in advance in the storage device 14. In this case, for example, the second document is a color sample corresponding to the second image data 22. The second document includes an adjustment target color. The adjustment target color is a target color that the user desires to obtain after color adjustment. The adjustment target color is also referred to as a color to be an adjustment target.

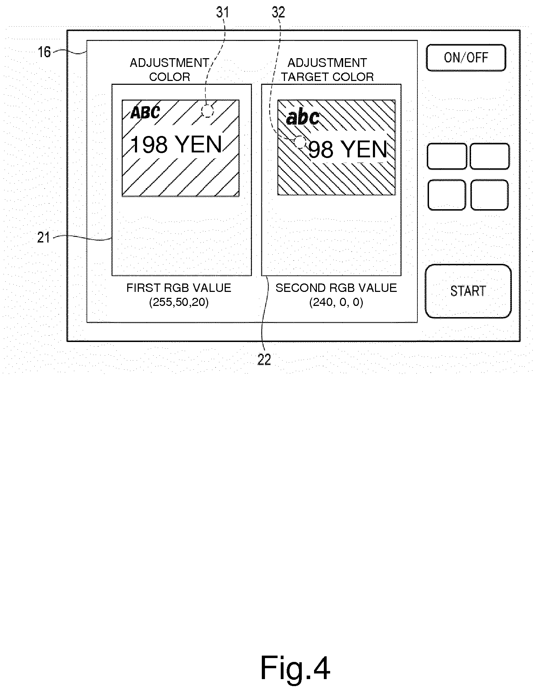

Fig. 4 is a diagram showing an example of selecting an adjustment color and an adjustment target color on the display screen. The example of selecting the adjustment color will be described. The user searches for the adjustment color while viewing the first document. The user inputs a first instruction to specify a first position 31 in the first image data 21 corresponding to the adjustment color by using the input device 15. For example, the user touches the first position 31 on the display screen of the display device 16 with a finger. This allows the user to select the adjustment color from the first image data 21. The input device 15 receives the first instruction. Note that the input device 15 may receive a predetermined region including the point touched by the user as the first position 31. In this case, the first position 31 is a region including a plurality of pixels included in the first image data 21. The pixels forming the region of the first position 31 are pixels that appear to have substantially the same color.

The display device 16 displays a first RGB value corresponding to the first position 31 on the basis of the reception of the first instruction from the input device 15. The first RGB value is a color value defined in the RGB color space. The first RGB value is calculated by the creation unit 111. For example, the creation unit 111 calculates, from the first image data 21, an RGB value of a pixel corresponding to the first position 31 as the first RGB value. Note that when the first position 31 is a region including a plurality of pixels, the creation unit 111 calculates the first RGB value as will be described later by an example. The creation unit 111 acquires, from the first image data 21, RGB values of the plurality of pixels forming the region corresponding to the first position 31. The creation unit 111 calculates an average value of the RGB values of the plurality of pixels as the first RGB value.

The example of selecting the adjustment target color will be described. The user searches for the adjustment target color while viewing the second document. The user inputs a second instruction to specify a second position 32 in the second image data 22 corresponding to the adjustment target color by using the input device 15. For example, the user touches the second position 32 on the display screen of the display device 16 with a finger. This allows the user to select the adjustment target color from the second image data 22. The input device 15 receives the second instruction. Note that the input device 15 may receive a predetermined region including the point touched by the user as the second position 32. In this case, the second position 32 is a region including a plurality of pixels included in the second image data 22. The pixels forming the region of the second position 32 are pixels having substantially the same color.

The display device 16 displays a second RGB value corresponding to the second position 32 on the basis of the reception of the second instruction from the input device 15. The second RGB value is a color value defined in the RGB color space. The second RGB value is calculated by the creation unit 111. For example, the creation unit 111 calculates, from the second image data 22, an RGB value of a pixel corresponding to the second position 32 as the second RGB value. Note that when the second position 32 is a region including a plurality of pixels, the creation unit 111 calculates the second RGB value as will be described later by an example. The creation unit 111 acquires, from the second image data 22, RGB values of the plurality of pixels forming the region corresponding to the second position 32. The creation unit 111 calculates an average value of the RGB values of the plurality of pixels as the second RGB value.

Next, processing of converting the first RGB value and the second RGB value into Lab values by the creation unit 111 will be described. The Lab values are used for creating the Lab-to-Lab' conversion table.

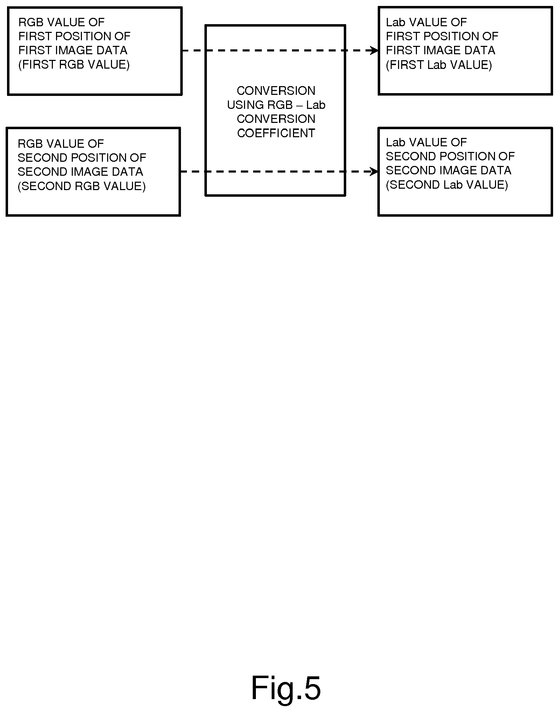

Fig. 5 is a diagram showing an example of converting the first RGB value and the second RGB value into Lab values. The creation unit 111 converts the first RGB value into a first Lab value. The first Lab value is a color value defined in the Lab color space. For example, the creation unit 111 converts the first RGB value into the first Lab value by using a conversion coefficient calculated in advance. Since the first RGB value is a color value corresponding to the first position 31 of the first image data 21, the first Lab value is also a color value corresponding to the first position 31 of the first image data 21. The first RGB value is also referred to as a first color value. The first RGB value is also referred to as an adjustment color. The first Lab value is also referred to as a second color value. The first Lab value is also referred to as an adjustment color. The first Lab value corresponds to a value obtained when the color of the first position 31 of the first document is measured with the colorimetric device.

The creation unit 111 converts the second RGB value into a second Lab value. The second Lab value is a color value defined in the Lab color space. For example, the creation unit 111 converts the second RGB value into the second Lab value by using a conversion coefficient calculated in advance. Since the second RGB value is a color value corresponding to the second position 32 of the second image data 22, the second Lab value is also a color value corresponding to the second position 32 of the second image data 22. The second RGB value is also referred to as a third color value. The second RGB value is also referred to as an adjustment target color. The second Lab value is also referred to as a fourth color value. The second Lab value is also referred to as an adjustment target color. The second Lab value corresponds to a value obtained when the color of the second position 32 of the second document is measured with the colorimetric device.

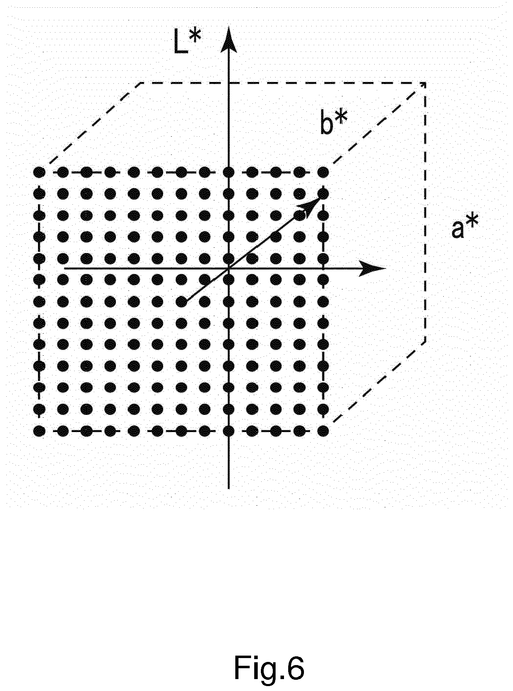

Next, processing of creating the Lab-to-Lab' conversion table by the creation unit 111 will be described. The Lab-to-Lab' conversion table is a three-dimensional lookup table (LUT) for converting the first Lab value into the second Lab value. Figs. 6 to 11 are diagrams each showing an example of creating the Lab-to-Lab' conversion table.

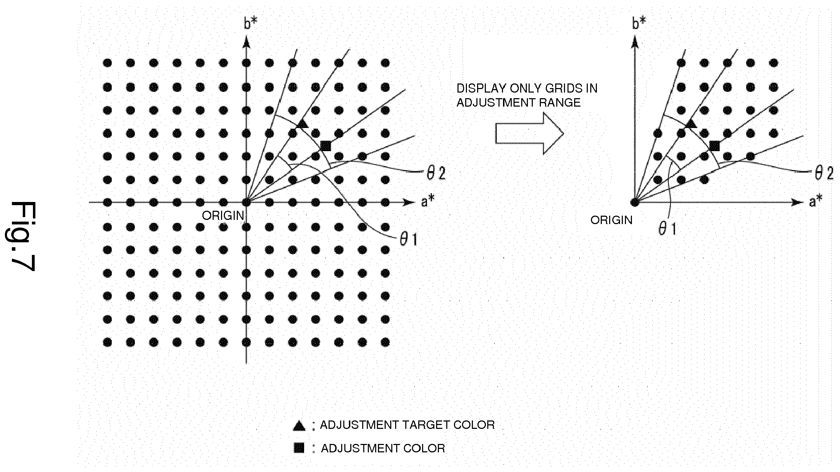

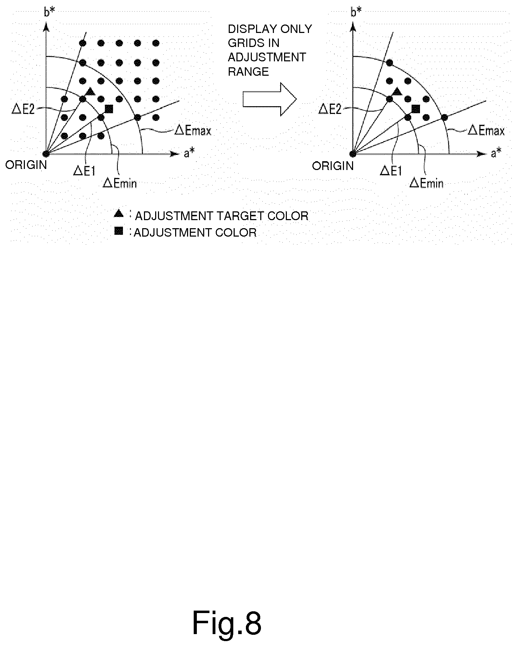

First, the creation unit 111 creates equally-spaced Lab grids as shown by an example in Fig. 6. For example, the creation unit 111 creates 13×13×13 equally-spaced Lab grids. Next, the creation unit 111 determines a hue adjustment range as shown by an example in Fig. 7. Fig. 7 is a diagram of an a*-b* plane. The left diagram of Fig. 7 shows the entire grids (13×13 grids) of the a*-b* plane at an arbitrary L grid. The origin is a grid at which the Lab grid corresponds to (0 to 13, 7, 7). The right diagram of Fig. 7 shows only grids included in the hue adjustment range. Note that the 13×13 grids are actually present on the a*-b* plane, but the right diagram of Fig. 7 shows only the grids involved in the adjustment for the convenience of description. Similarly, Fig. 8 and the following figures also show only the grids involved in the adjustment. A grid point of the adjustment color is represented by a square so as to be distinguished from other grid points. A grid point of the adjustment target color is represented by a triangle so as to be distinguished from other grid points. For example, the creation unit 111 sets, as the hue adjustment range, a range expanding from the origin and having an angle (θ2). The angle (θ2) is obtained by adding an angle with an adjustment width to an angle (θ1) represented by the grid point of the adjustment color and the grid point of the adjustment target color.

Next, the creation unit 111 determines a saturation adjustment range as shown by an example in Fig. 8. Fig. 8 is a diagram of the a*-b* plane. The left diagram of Fig. 8 shows grids included in the hue adjustment range as in the right diagram of Fig. 7. The right diagram of Fig. 8 shows only grids included in both the hue adjustment range and the saturation adjustment range. For example, the creation unit 111 calculates the saturation adjustment range with respect to the hue adjustment range determined as described above. Here, the creation unit 111 calculates a distance (ΔE1) from the origin to the grid point of the adjustment color and a distance (ΔE2) from the origin to the grid point of the adjustment target color.

The creation unit 111 compares ΔE1 and ΔE2 with each other. The creation unit 111 sets the small one of ΔE1 and ΔE2 as ΔEs, and the larger one as AEb. The creation unit 111 provides an adjustment width to AEs and AEb and sets such AEs and AEb as ΔEmin and ΔEmax, respectively. ΔEmin is a distance obtained when the adjustment width is subtracted from ΔEs. ΔEmax is a distance obtained when the adjustment width is added to ΔEb. The adjustment width for ΔEs and the adjustment width for ΔEb may be the same or different. The creation unit 111 sets a gap between ΔEmin and ΔEmax, which are the distances from the origin, as the saturation adjustment range. The grids included in both the hue adjustment range and the saturation adjustment range are referred to as grids to be adjusted.

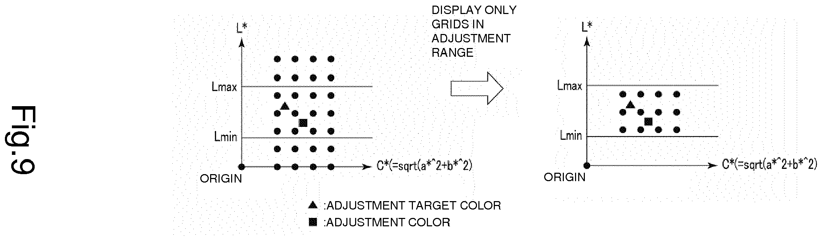

Next, the creation unit 111 determines a brightness adjustment range as shown by an example in Fig. 9. Fig. 9 is a diagram of an L*-C* plane. L* represents brightness, and C* represents a value calculated by sqrt(a*^2+b*^2). The left diagram of Fig. 9 shows grids involved in the adjustment. The right diagram of Fig. 9 shows only grids included in the brightness adjustment range.

For example, the creation unit 111 compares brightness (L1) of the adjustment color and brightness (L2) of the adjustment target color with each other. The creation unit 111 sets the smaller one of L1 and L2 as Ls, and the larger one as Lb. The creation unit 111 provides an adjustment width to Ls and Lb and sets such Ls and Lb as Lmin and Lmax, respectively. Lmin is a value obtained when the adjustment width is subtracted from Ls. Lmax is a value obtained when the adjustment width is added to Lb. The adjustment width for Ls and the adjustment width for Lb may be the same or different. The creation unit 111 sets a gap between Lmin and Lmax as the brightness adjustment range. The grids included in the brightness adjustment range are referred to as grids to be adjusted.

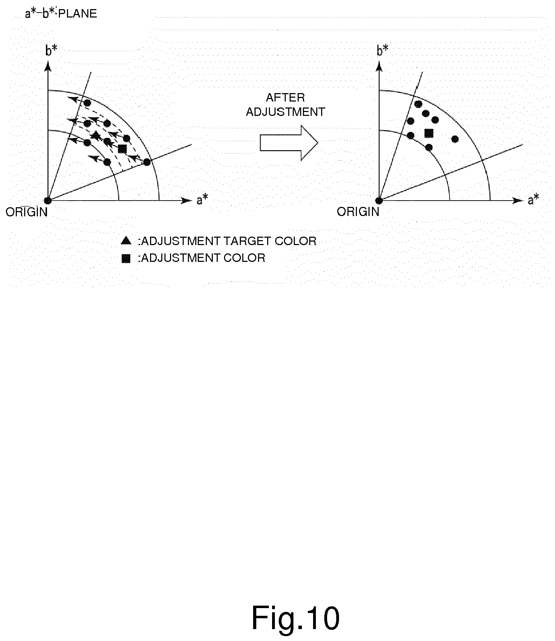

Next, as shown by an example in Fig. 10, the creation unit 111 adjusts the grid points of the grids to be adjusted. Fig. 10 is a diagram of the a*-b* plane. The left diagram of Fig. 10 shows grids before the adjustment, which are included in both the hue adjustment range and the saturation adjustment range. The right diagram of Fig. 10 shows grids after the adjustment, which are included in both the hue adjustment range and the saturation adjustment range.

The creation unit 111 moves the positions of the grid points of the grids to be adjusted, which are included in both the hue adjustment range and the saturation adjustment range, and thus adjusts the hue and the saturation. Here, the creation unit 111 moves the grid point of the adjustment color to the position of the grid point of the adjustment target color. When moving the grid point of the adjustment color to the position of the grid point of the adjustment target color, the creation unit 111 also moves positions of grid points around the grid point of the adjustment color. For example, the creation unit 111 moves grid points other than the grid point of the adjustment color at a ratio regarding a change in angle and a change in saturation of the adjustment target color and the adjustment color. In the example shown in the left diagram of Fig. 10, the creation unit 111 moves the grid point of the adjustment color in a direction reducing the saturation when moving the grid point of the adjustment color to the position of the grid point of the adjustment target color. Therefore, the creation unit 111 also moves grid points other than the grid point of the adjustment color in a direction reducing the saturation. Note that, in a case where the saturation is not adjusted, the creation unit 111 moves the grid points of the grids to be adjusted along the dotted lines.

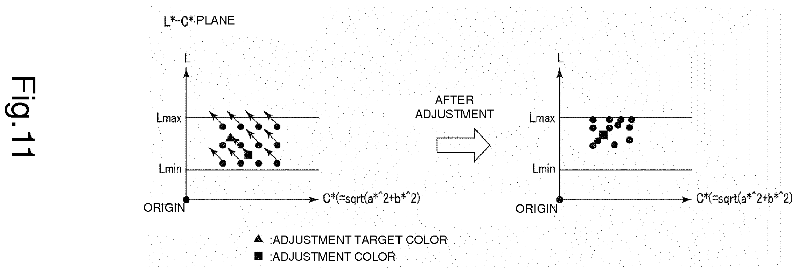

Next, as shown by an example in Fig. 11, the creation unit 111 adjusts the grid points of the grids to be adjusted. Fig. 11 is a diagram of the L*-C* plane. The left diagram of Fig. 11 shows grids before the adjustment, which are included in the brightness adjustment range. The right diagram of Fig. 11 shows grids after the adjustment, which are included in the brightness adjustment range.

The creation unit 111 moves the positions of the grid points of the grids to be adjusted, which are included in the brightness adjustment range. Here, the creation unit 111 moves the grid point of the adjustment color to the position of the grid point of the adjustment target color. When moving the grid point of the adjustment color to the position of the grid point of the adjustment target color, the creation unit 111 also moves positions of grid points around the grid point of the adjustment color. For example, the creation unit 111 uniformly moves grid points other than the grid point of the adjustment color in a direction in which the grid point of the adjustment color is moved to the position of the grid point of the adjustment target color. The amount of movement of the grid points other than the grid point of the adjustment color is the same as the amount of movement of the grid point of the adjustment color. Note that the amount of movement of the grid points other than the grid point of the adjustment color may be different from that of the grid point of the adjustment color.

The creation unit 111 can create the Lab-to-Lab' conversion table by adjusting the grid points of the grids to be adjusted, which are shown by an example with reference to Figs. 10 and 11. The creation unit 111 also adjusts the positions of the grid points around the grid point of the adjustment color in addition to the grid point of the adjustment color. Thus, the continuity of color is not lost. When the Lab-to-Lab' conversion table is used, in a case where a Lab value on the input side is the first Lab value, a Lab value on the output side is not the first Lab value as it is, but the second Lab value. In such a manner, in a case where the Lab value on the input side is the first Lab value, the Lab value on the input side and the Lab value on the output side are different values.

### [Processing of Creating Color Conversion Table]

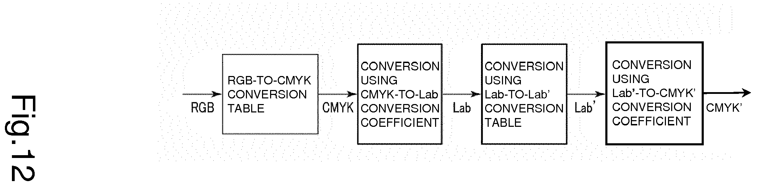

Processing of creating the color conversion table will be described. Fig. 12 is a diagram showing an example of creating the color conversion table. The creation unit 111 creates the color conversion table as shown by an example below.

The creation unit 111 applies a preset CMYK-to-Lab conversion coefficient to an RGB-to-CMYK conversion table. The RGB-to-CMYK conversion table is a table for converting an RGB value into a CMYK value. The RGB value is a color value defined in the RGB color space. The CMYK value is a color value defined in the CMYK color space. The RGB-to-CMYK conversion table may be an existing table. For example, the existing table is stored in the storage device 14. The CMYK-to-Lab conversion coefficient is a polynomial coefficient for converting the CMYK value into the Lab value. The creation unit 111 applies the CMYK-to-Lab conversion coefficient to the RGB-to-CMYK conversion table, and can thus create an RGB-to-Lab conversion table. The RGB-to-Lab conversion table is a table for converting the RGB value into the Lab value.

The creation unit 111 applies the Lab-to-Lab' conversion table described above to the RGB-to-Lab conversion table. The creation unit 111 applies the Lab-to-Lab' conversion table to the RGB-to-Lab conversion table and can thus create an RGB-to-Lab' conversion table. The RGB-to-Lab' conversion table is a table for converting the RGB value into the Lab' value.

The creation unit 111 applies a preset Lab'-to-CMYK' conversion coefficient to the RGB-to-Lab' conversion table. The Lab'-to-CMYK' conversion coefficient is a polynomial coefficient for converting the Lab' value into a CMYK value. The CMYK' value is a color value defined in the CMYK color space. The CMYK' value means a CMYK value obtained after conversion using the Lab'-to-CMYK' conversion coefficient. So, the CMYK' value is given ""' so as to be distinguished from the CMYK value obtained after conversion using the RGB-to-CMYK conversion table.

The creation unit 111 applies the Lab'-to-CMYK' conversion coefficient to the RGB-to-Lab' conversion table and can thus create an RGB-to-CMYK' conversion table. The RGB-to-CMYK' conversion table is a table for converting the RGB value into the CMYK' value and corresponds to the color conversion table.

Note that, each time the creation unit 111 receives the first instruction and the second instruction in the input device 15, the creation unit 111 adjusts the Lab-to-Lab' conversion table such that the Lab value on the input side and the Lab value on the output side are different values, and creates again an RGB-to-CMYK' conversion table. Therefore, the "creation" of the RGB-to-CMYK conversion table by the creation unit 111 is not limited to the meaning of new establishment and includes the meaning of update and adjustment of the established table.

### [Print Processing Based on Color Adjustment]

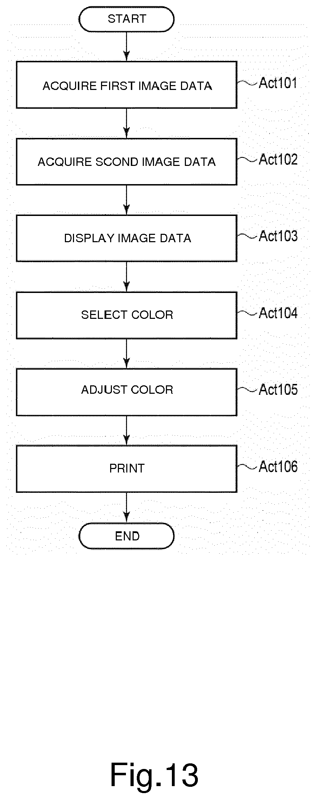

Print processing based on the color adjustment will be described. Fig. 13 is a flowchart for showing an example of the print processing based on the color adjustment of the MFP 1.

In Act 101, the processor 11 acquires the first image data 21 based on the first document. In Act 102, the processor 11 acquires the second image data 22 to be compared with the first image data 21. In Act 103, the processor 11 controls the display device 16 to display the first image data 21 and the second image data 22 on the display device 16.

In Act 104, the processor 11 receives a user operation to select an adjustment color and an adjustment target color via the input device 15. In Act 104, the processor 11 receives a first instruction to specify a first position 31 in the first image data 21 corresponding to the adjustment color via the input device 15. The processor 11 receives a second instruction to specify a second position 32 in the second image data 22 corresponding to the adjustment target color for the color of the first position via the input device 15.

In Act 105, the processor 11 (creation unit 111) creates a color conversion table for executing the color adjustment on the basis of the first instruction and the second instruction. In Act 105, as described above, the creation unit 111 calculates a first RGB value on the basis of the first instruction and converts the first RGB value into a first Lab value. As described above, the creation unit 111 calculates a second RGB value on the basis of the second instruction and converts the second RGB value into a second Lab value. The creation unit 111 creates a Lab-to-Lab' conversion table for converting the first Lab value into the second Lab value on the basis of the first Lab value and the second Lab value. As described above, the creation unit 111 creates the color conversion table on the basis of the Lab-to-Lab' conversion table.

In Act 106, the processor 11 executes print processing. In Act 106, the processor 11 acquires print data to be printed, which is selected by the user. The print data may be first image data. The processor 11 (image processing unit 112) converts the print data from color values defined in the RGB color space to color values defined in the CMYK color space by using the color conversion table. The image forming device 19 receives the print data defined in the CMYK color space from the image processing unit 112. The image forming device 19 forms a color image on a medium on the basis of the print data and then outputs a printed material under the control of the processor 11. This provides the printed material corresponding to the first image data, which is adjusted to have a user's favorite color, as compared with the first document.

Note that, in Act 104, the processor 11 may receive a first instruction to specify a plurality of first positions 31 in the first image data 21 corresponding to a plurality of adjustment colors via the input device 15. The processor 11 may receive a second instruction to specify a plurality of second positions 32 in the second image data 22 corresponding to adjustment target colors for the respective colors of the first positions 31 via the input device 15. In this example, in Act 105, the creation unit 111 creates a Lab-to-Lab' conversion table for converting the first Lab values of the respective first positions 31 into the second Lab values of the respective second positions 32.

According to this embodiment, the MFP 1 receives the first instruction to specify the first positions 31 corresponding to the adjustment colors and the second instruction to specify the second positions 32 corresponding to the adjustment target colors. The MFP 1 creates a color conversion table on the basis of the first instruction and the second instruction. This allows the user to easily specify the first position 31 corresponding to the adjustment color and the second position 32 corresponding to the adjustment target color, which are to be used to create the color conversion table. The user can easily create the color conversion table without using a special device such as a colorimetric device, and can easily adjust the color of the printed material in accordance with the user's own preference.

Additionally, the MFP 1 receives a region including a plurality of pixels as the first position 31 and receives a region including a plurality of pixels as the second position 32. The user determines a tinge of color not per pixel but per region that has a certain size including a plurality of pixels and is perceivable by the eye. So, the user determines whether the color of the region is a favorite color or not per region including a plurality of pixels. By receiving the adjustment color and the adjustment target color per region, the MFP 1 can create a color conversion table with which a color closer to a user's favorite color is obtained.

Additionally, the MFP 1 converts the color value in the device-dependent color space, which corresponds to the first position 31, into the color value in the device-independent color space. The MFP 1 converts the color value in the device-dependent color space, which corresponds to the second position 32, into the color value in the device-independent color space. The MFP 1 creates the color conversion table on the basis of the color values in the device-independent color space. This allows the MFP 1 to acquire the color values in the device-independent color space, which correspond to the values measured with a colorimetric device, by only a user operation through the input device 15 without using the colorimetric device. The MFP 1 can easily create a color conversion table for converting the adjustment color into the adjustment target color on the basis of the color values in the device-independent color space.

Additionally, the MFP 1 uses the RGB color space as the first color space, the CMYK color space as the second color space, and the Lab color space as the third color space. This allows the MFP 1 to acquire the first Lab value and the second Lab value corresponding to the values measured with the colorimetric device, by only a user operation through the input device 15 without using the colorimetric device. The MFP 1 can easily create a color conversion table for converting the adjustment color into the adjustment target color on the basis of the first Lab value and the second Lab value. Using such a color conversion table, the MFP 1 can convert the color value defined in the RGB color space into the color value defined in the CMYK color space such that a color closer to a user's favorite color is obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image processing apparatus, comprising:
a storage device configured to store
first image data based on a document to be adjusted, and
second image data based on a document for comparison;
a display device configured to display
a first image corresponding to the first image data, and
a second image corresponding to the second image data;
an input device configured to receive
a first instruction to specify a first position in the displayed first image, the first position in the first image data corresponding to a color to be adjusted, and
a second instruction to specify a second position in the displayed second image, the second position in the second image data corresponding to a color to be an adjustment target for the color of the first position; and
a processor configured to
calculate a color value defined in a first color space and corresponding to the first position in the first image data, and a color value defined in the first color space and corresponding to the second position in the second image data, and
create a first conversion table for converting, on a basis of the calculated color value corresponding to the first position and the calculated color value corresponding to the second position, the color value defined in the first color space into a color value defined in a second color space different from the first color space.

2. The image processing apparatus according to Claim 1, wherein
the first position includes a region including a plurality of pixels included in the first image data, and
the second position includes a region including a plurality of pixels included in the second image data.

3. The image processing apparatus according to Claim 1 or 2, wherein
each of the first color space and the second color space is a device-dependent color space, and
the processor is configured to
calculate a first color value defined in the first color space and corresponding to the first position,
convert the first color value into a second color value defined in a third color space that is a device-independent color space,
calculate a third color value defined in the first color space and corresponding to the second position,
convert the third color value into a fourth color value defined in the third color space,
create a second conversion table for converting the second color value into the fourth color value in the third color space, and
create the first conversion table on a basis of the second conversion table.

4. The image processing apparatus according to Claim 3, wherein
the first color space includes an RGB color space,
the second color space includes a CMYK color space, and
the third color space includes a Lab color space.

5. The image processing apparatus according to any one of Claims 1 to 4, further comprising
a scanner configured to
read a document, and
output image data based on the document, wherein
the scanner is configured to
read the document to be adjusted and the document for comparison, and
output the first image data and the second image data, which are to be used to create the first conversion table, and
the storage device is configured to store the first image data and the second image data that are output from the scanner.

6. The image processing apparatus according to Claim 5, wherein
the storage device is configured to store predetermined image data as the second image data, and
the scanner is configured to
read the document to be adjusted, and
output the first image data, which is to be used to create the first conversion table.

7. The image processing apparatus according to Claim 3, wherein
the storage device includes an existing conversion table for converting the color value defined in the first color space into the color value defined in the second color space, and
the processor is configured to
convert the calculated first color value into a color value corresponding to the first color value and being defined in the second color space by using the existing conversion table,
convert the converted color value corresponding to the first color value into the second color value by using a predetermined first polynomial coefficient,
convert the calculated third color value into a color value corresponding to the third color value and being defined in the second color space by using the existing conversion table, and
convert the converted color value corresponding to the third color value into the fourth color value by using the first polynomial coefficient.

8. The image processing apparatus according to Claim 3, wherein
the created first conversion table provides conversion of the color value converted using the second conversion table into the color value defined in the second color space by using a predetermined second polynomial coefficient.

9. The image processing apparatus according to Claim 2, wherein
the processor is configured to
acquire, from the first image data, color values of a plurality of pixels included in a region corresponding to the first position, the color values being defined in the first color space, and calculate an average value of the acquired color values of the plurality of pixels, as the color value defined in the first color space and corresponding to the first position, and
acquire, from the second image data, color values of a plurality of pixels included in a region corresponding to the second position, the color values being defined in the first color space, and calculate an average value of the acquired color values of the plurality of pixels, as the color value defined in the first color space and corresponding to the second position.

10. An image processing method, comprising:
acquiring first image data based on a document to be adjusted, and second image data based on a document for comparison;
displaying, by a display device, a first image corresponding to the acquired first image data, and a second image corresponding to the acquired second image data;
receiving, by an input device, a first instruction to specify a first position in the displayed first image, the first position in the first image data corresponding to a color to be adjusted;
receiving, by the input device, a second instruction to specify a second position in the displayed second image, the second position in the second image data corresponding to a color to be an adjustment target for the color of the first position; and
creating a first conversion table for converting, on a basis of a color value defined in a first color space and corresponding to the first position in the first image data and a color value defined in the first color space and corresponding to the second position in the second image data, the color value defined in the first color space into a color value defined in a second color space different from the first color space.

11. The image processing method according to Claim 10, further comprising:
calculating a first color value defined in the first color space and corresponding to the first position,
converting the first color value into a second color value defined in a third color space that is a device-independent color space,
calculating a third color value defined in the first color space and corresponding to the second position,
converting the third color value into a fourth color value defined in the third color space,
creating a second conversion table for converting the second color value into the fourth color value in the third color space, and
creating the first conversion table on a basis of the second conversion table.

12. The image processing method according to Claim 11, further comprising:
converting the calculated first color value into a color value corresponding to the first color value and being defined in the second color space by using the existing conversion table,
converting the converted color value corresponding to the first color value into the second color value by using a predetermined first polynomial coefficient,
converting the calculated third color value into a color value corresponding to the third color value and being defined in the second color space by using the existing conversion table, and
converting the converted color value corresponding to the third color value into the fourth color value by using the first polynomial coefficient.

13. The image processing method according to according to any one of Claims 10 to 12, further comprising:
acquiring, from the first image data, color values of a plurality of pixels included in a region corresponding to the first position, the color values being defined in the first color space, and calculate an average value of the acquired color values of the plurality of pixels, as the color value defined in the first color space and corresponding to the first position, and
acquiring, from the second image data, color values of a plurality of pixels included in a region corresponding to the second position, the color values being defined in the first color space, and calculate an average value of the acquired color values of the plurality of pixels, as the color value defined in the first color space and corresponding to the second position.

14. A computer program comprising instructions which, when the program is executed by a computer, cause the computer to carry out the steps of the method according to any one of claims 10 to 13.

15. A computer-readable medium having stored thereon the computer program of claim 14.
